# NEUE EUROPÄISCHE PATENTSCHRIFT

(11) **EP 2 875 611 B2**
(45) Veröffentlichungstag und Bekanntmachung des Hinweises auf die Entscheidung über den Einspruch: **06.05.2020**
(45) Hinweis auf die Patenterteilung: 03.05.2017
(21) Anmeldenummer: 13750499.9
(22) Anmeldetag: 23.07.2013
(51) Int. Cl.: H04L 12/28, H04W 4/02

(54) **VERFAHREN UND VORRICHTUNG ZUR GEOPOSITIONSBASIERTEN STEUERUNG VON VERZÖGERUNGSBEHAFTETEN SYSTEMEN**
METHOD AND DEVICE FOR THE GEOPOSITION-BASED CONTROL OF SYSTEMS AFFECTED BY DELAYS
PROCÉDÉ ET DISPOSITIF POUR LA COMMANDE DE SYSTÈMES AFFECTÉS PAR UN RETARD, BASÉES SUR UNE GÉOPOSITION

(30) Priorität: 23.07.2012 DE 102012014562
(43) Veröffentlichungstag der Anmeldung: 27.05.2015
(73) Patentinhaber: tado GmbH, 80637 München (DE)
(72) Erfinder: DEILMANN, Christian, 80805 München (DE); SCHWARZ, Johannes, 81669 München (DE); MÜNNIX, Michael, 80469 München (DE)
(74) Vertreter: Ridderbusch, Oliver
(86) Internationale Anmeldenummer: PCT/EP2013/002183
(87) Internationale Veröffentlichungsnummer: WO 2014/015977

(56) Entgegenhaltungen:
- US-A1- 2002 072 356
- US-A1- 2010 127 854
- US-A1- 2010 161 149

## Beschreibung

### GEBIET DER ERFINDUNG

Die vorliegende Offenbarung betrifft ein Verfahren und eine Vorrichtung zur Steuerung des Systemzustandes eines verzögerungsbehafteten Systems auf der Basis von Geopositionsdaten einer Person. Insbesondere betrifft die Erfindung ein Verfahren und eine Vorrichtung zur Steuerung des Systemzustandes bei Abwesenheit der Person vom Ort des Systems mit dem Ziel, den Systemzustand stets so vorzugeben, dass das System innerhalb einer geschätzten Zeit bis zum Eintreffen der Person am Ort des Systems einen vorgegebenen Anwesenheitszustand einstellen kann.

### HINTERGRUND DER ERFINDUNG

Viele technische Systeme benötigen nach der Vorgabe eines neuen Sollwertes (Führungsgröße) eine gewisse Zeit diesen neuen Sollwert oder Sollzustand zu erreichen. Zum Beispiel benötigt eine Heizungsanlage nach Vorgabe einer Raumtemperatur, die höher als eine aktuell gemessene Temperatur ist, eine Weile bis diese höhere Raumtemperatur im Raum erreicht wird. Das System erreicht den vorgegebenen Sollwert also erst verzögert. Demgemäß werden Systeme, die ihren Sollwert oder Sollzustand erst nach einer gewissen Zeitspanne erreichen, in dieser Offenbarung als verzögerungsbehaftet bezeichnet. Die Verzögerung wird im Wesentlichen von der Leistungsfähigkeit bestimmt, mit der das System auf einen Sprung der Führungsgröße innerhalb eine bestimmten Zeit den neuen Sollwert einstellt. Wird im Rahmen dieser Offenbarung also von Leistungsfähigkeit gesprochen so ist damit die Geschwindigkeit gemeint, mit der ein neuer Sollwert bei einem Sprung der Führungsgröße eingestellt wird.

Verbraucher erwarten heutzutage, dass technische Systeme bei Bedarf sofort mit der gewünschten Leistung verfügbar sind. Können Systeme dies aufgrund physikalischer Zusammenhänge nicht leisten, entscheiden sich Verbraucher häufig dazu Systeme dauerhaft auf dem gewünschten Leistungsniveau zu betreiben, auch wenn der durchgehende Betrieb des Systems mit einem höheren Energieverbrauch einhergeht. Ein typisches Beispiel sind Heizungssysteme. Der Verbraucher möchte, wenn er unterwegs war und nach Hause zurück kommt, eine warme Wohnung vorfinden. Um dies zu gewährleisten, entscheidet er sich häufig dazu, die Heizungsanlage auch während seiner Abwesenheit mit unverminderter Leistung zu betreiben. Der Einsparungsvorteil durch ein "Herunterregeln" der Heizungsanlage wiegt in der Verbraucherwahrnehmung häufig geringer als der Komfort einer warmen Wohnung bei Ankunft. Im Gegensatz dazu überwiegt für den durchschnittlichen Verbraucher der Einsparungsvorteil bei Systemen, die bei Bedarf sofort mit der gewünschten Leistung verfügbar sind. Ein typisches Beispiel hierfür ist elektrisches Licht aus einer Glühbirne. Es ist bei Betätigung des zugehörigen Lichtschalters sofort mit annähernd maximaler Leistung verfügbar. Daher bedeutet ein Ausschalten der Glühbirne keinen bzw. nur sehr geringen Komfortverlust für den Verbraucher. Folglich möchte der Verbraucher in einem solchen Fall die Energieeinsparungsmöglichkeiten realisieren und nimmt den minimal geringeren Komfort durch aktives An- und Ausschalten in Kauf.

### STAND DER TECHNIK

Aufgrund physikalischer Zusammenhänge kann das Antwortverhalten (Erreichen des vorgegebenen Sollzustandes oder Sollwertes durch das System) verzögerungsbehafteter Systeme auf eine sprunghafte Änderung der Führungsgröße in der Regel nicht bzw. nur begrenzt beschleunigt werden. Folglich wurden in der Vergangenheit verschiedene technische Lösungen ersonnen, die selbsttätig eine Anpassung der Leistungsanforderung an den Bedarf eines Nutzers erreichen sollen.

Ein klassisches Beispiel aus dem Stand der Technik sind Zeitschaltregler, die eine Leistungsvorgabe an ein verzögerungsbehaftetes System in Abhängigkeit einer Tageszeit automatisch einstellen. Nachteilig an solchen Systemen ist, dass Zeitschaltregler den tatsächlichen Leistungsbedarf eines Nutzers des verzögerungsbehafteten Systems nur unzureichend abbilden können. Zwar kann ein Zeitschaltregler den gewöhnlichen Tagesablauf eines Nutzers gut nachbilden, er ist aber keinesfalls dazu in der Lage dynamisch auf Änderungen des Bedarfs des Nutzers zu reagieren. So wird zum Beispiel ein Zeitschaltregler einer Heizungsanlage stets am programmierten Einschaltzeitpunkt die Heizung einschalten unabhängig davon, ob der Nutzer dies zu diesem Zeitpunkt tatsächlich benötigt. Üblicherweise werden Zeitschaltregler so eingestellt ist, dass die Heizung zum Beispiel täglich um 17 Uhr einschaltet, wobei dieser Einstellung die Annahme zugrunde liegt, der Nutzer komme um 17 Uhr nach Hause. Wenn er tatsächlich zu dieser Zeit nicht nach Hause kommt, wird die Heizung dennoch eingeschaltet und folglich Heizenergie verschwendet. Gleichermaßen kann ein Zeitschaltregler nicht erkennen, wenn ein Nutzer früher als zur programmierten Zeit zurückkommt.

Ein moderner Ansatz zur bedarfsgerechten Steuerung von gebäudetechnischen Komponenten, wie etwa einem HVAC-Systemen (HVAC=Heating Venting Air-Conditioning) ist in der DE 10 2011 052 467 beschrieben. Nach der dort vorgeschlagenen Lösung ist eine gebäudetechnische Komponente mit einer höheren Leistung zu betreiben, wenn sich ein Nutzer des Gebäudes innerhalb einer um ein Gebäude definierten Geozone befindet. Ein weitergehendes Geo-Zonen-Konzept dieser Anmeldung sieht vor, mehrere unterschiedliche Geozonen um ein Gebäude zu definieren, wobei näher am Gebäude liegende Geozonen jeweils mit einer höheren Leistungsvorgabe an die gebäudetechnische Komponente verknüpft sind. Dadurch kann die Leistung bei einem Annähern des Nutzers an das Gebäude stufenweise angehoben werden.

Bei einer derartigen Geozonen-basierten Steuerung der Leistungsvorgabe wird die Leistungsvorgabe im Wesentlichen in Abhängigkeit der Distanz eines Nutzers vom Gebäude bestimmt. Nachteilig an derartigen Distanz-basierten Steuerungen ist, dass die Distanz nur indirekt mit einem tatsächlichen Eintreffenszeitpunkt des Nutzers korreliert, da die Distanz alleine keine Information über die tatsächliche Reisedauer des Nutzers von der Geozone/der Geoposition bis zum Gebäude enthält. Entscheidende Einflussfaktoren auf die Reisedauer sind neben der Distanz nämlich auch die aktuelle Geschwindigkeit, die gewählte Reiseroute, die Fortbewegungsart (Auto, Fahrrad, Gehen) und/oder die gegenwärtig vorherrschenden Verkehrsbedingungen. Aus der Distanz alleine kann also ein Eintreffenszeitpunkt nur ungenau vorausbestimmt werden, was zu einer nicht optimal auf das Eintreffen des Gebäudenutzers abgestimmten Leistungsvorgabe an das System führt.

Ein weiterer Nachteil der bekannten Geo-Zonen-basierten Steuerung ist, dass ein System stets nur auf eine Leistungsvorgabe abgesenkt wird, die auf Basis der aktuellen Distanz des Nutzers zum Gebäude bestimmt wird. Hält sich ein Nutzer länger an einem bestimmten Ort auf, wäre es vorteilhaft, wenn das System für einen Großteil dieser Zeit auch mit einer geringeren Leistungsvorgabe betrieben werden könnte, als dies rein nach der Distanz der Fall wäre. Eine solche weitere Absenkung der Leistungsvorgabe ist mit einer rein Distanz-basierten Steuerung jedoch nicht möglich, da bei dieser Art der Regelung einer Distanz stets eine korrespondierende Leistungsanforderung zugeordnet ist.

Aus der US 2010/0161149 A1 ist ein Verfahren zur Steuerung eines Systems in Abhängigkeit der Ankunftszeit eines Nutzers am Ort des Systems bekannt.

### DARSTELLUNG DER ERFINDUNG

Vor diesem Hintergrund ist es daher die Aufgabe der Erfindung, ein Verfahren und eine Vorrichtung zur Geopositions-basierten Steuerung eines Systemzustandes eines verzögerungsbehafteten Systems anzugeben, das den Systemzustand bei Abwesenheit einer dem System zugeordneten Person so steuert, dass das System stets in einem Systemzustand betrieben wird, von dem aus das System unter Beachtung der systemeigenen Verzögerung bzw. eigenen Leistungsfähigkeit und der aktuellen Geoposition der Person einen vorgegebenen Anwesenheitszustand bei Eintreffen der Person am Ort des Systems einstellen kann.

Diese Aufgabe wird durch die Merkmale der Patentansprüche 1 und 2 gelöst und durch die Maßnahmen der untergeordneten Patentansprüche 3 bis 10 in vorteilhafter Weise weitergebildet.

Vorgeschlagen wird ein Verfahren zur Steuerung eines ortsfesten verzögerungsbehafteten Systems in Abhängigkeit einer variablen Geoposition mindestens einer Person.

Ein verzögerungsbehaftetes System im Sinne dieser Offenbarung ist ein System, bei dem die Regelgröße (z.B. eine Innenraumtemperatur oder ein Ladezustand) nur mit einer Verzögerung auf eine Änderung der Führungsgröße (z.B. eine Solltemperatur, ein Sollladezustand) reagiert. Beispiele für derartige verzögerungsbehaftete Systeme sind Heizungsanlagensysteme, Klimaanlagensysteme, Energiespeichersysteme, Warmwasserboiler und Energiespeichersysteme in Elektrofahrzeugen. Systeme in diesem Sinne sind aber auch beheizte, gekühlte oder klimatisierte Räume, Wohnungen, Häuser und Gebäude. Die Verzögerung resultiert aus der in der Regel physikalisch begründeten begrenzten Leistungsfähigkeit solcher Systeme. So kann ein Heizungssystem in der Regel einen Raum mit zum Beispiel maximal 2 K/h aufheizen.

Ortsfest im Sinne dieser Offenbarung bedeutet nicht, dass das System gänzlich unbeweglich ist, sondern soll zum Ausdruck bringen, dass das System während der Durchführung des Verfahrens ortsfest ist. Als ortsfeste Systeme kommen demnach insbesondere Heizungsanlagen, Kühlanlagen, Klimaanlagen, Energiespeichersysteme, Warmwasserboiler, Energiespeicher von Elektrofahrzeugen oder sogar ein Raum, eine Wohnung, ein Haus oder ein Gebäude in Betracht.

Das vorgeschlagene Verfahren hat das Ziel das System derart zu steuern, dass es einen vorgegebenen Anwesenheitszustand erreicht, wenn die Person am Ort des Systems eintrifft. Für den Fall, dass der zu steuernde Systemzustand eine Temperatur zum Beispiel eines Wohnraumes ist, kann der Anwesenheitszustand eine bestimmte Temperatur sein, die die Person als "Wohlfühl"-Innenraumtemperatur gewählt hat. Das Verfahren unterscheidet zwischen einem Anwesenheitszustand, bei dem sich die Person am Ort bzw. In einem gewissen Umkreis um den Ort des ortsfesten Systems befindet, und einem Abwesenheitszustand, bei dem die Person weiter als eine definierte Mindestdistanz von dem Ort des ortsfesten Systems entfernt ist.

Das Verfahren sieht zunächst ein Ermitteln der Geoposition einer Person vor, die das zu steuernde System nutzt (z.B. ein Raum- oder Gebäudenutzer). Ein Ermitteln der Geoposition der Person kann durch unterschiedliche Techniken erreicht werden. Dabei ist es nicht erforderlich, dass das Verfahren die Geoposition selbst ermittelt. Vielmehr genügt es, dass das Verfahren auf eine Geopostion der Person zugreifen kann. Üblicherweise muss eine Person zur Erfassung ihrer Geoposition ein Gerät mit sich führen, das ausgebildet ist, Geopositionsdaten zu ermitteln. Typischerweise sind heutige Mobiltelefone mit derartigen Einrichtungen standardmäßig ausgestattet. Über eine Softwareanwendung, die auf dem Mobiltelefon ausgeführt wird, werden die Geopositionsdaten dann zum Beispiel an eine weitere Stelle übermittelt, wie etwa ein entferntes Steuerungssystem. Die Firma Google stellt unter der Produktbezeichnung Google Latitude ein Softwarepaket bereit, das auf den verschiedensten Mobiltelefonen installiert werden kann und ausgebildet ist, die Geopositionsdaten des Mobiltelefonbesitzers an einen Internetserver zu übertragen. Der Internetserver stellt eine Schnittstelle bereit, über die die Geopositionsdaten eines Google-Latitude Nutzers dann ausgelesen werden können. Die ermittelten Geopositionsdaten sind so dem vorgeschlagenen Verfahren und der vorgeschlagenen Vorrichtung zugänglich.

Weiterhin umfasst das vorgeschlagene Verfahren ein Schätzen einer Zeitdauer, die die Person von der ermittelten Geoposition aus bis zum Eintreffen am Ort des Systems benötigt.

Schließlich umfasst das Verfahren das Vorgeben eines Sollzustandes an das System, der so gewählt ist, dass das System den Anwesenheitszustand innerhalb der geschätzten Zeitdauer unter Beachtung der systemeigenen Verzögerung bzw. der systemeigenen Leistungsfähigkeit innerhalb eines definierten Toleranzbereichs erreichen kann. Der vorzugebende Sollwert wird in Abhängigkeit des vorgegebenen Anwesenheitszustands, der Leistungsfähigkeit des Systems und der geschätzten Zeitdauer ermittelt.

Das Vorgeben eines solchen Sollzustandes an das System kann zum Beispiel durch ein Multiplizieren der geschätzten Zeitdauer mit einem vorgehaltenen Gradienten realisiert werden, der ein Maß für die Leistungsfähigkeit des Systems ist. Der Gradient beschriebt das Erreichen eines Sollzustandes pro Zeiteinheit. Handelt es sich bei dem ortsfesten System zum Beispiel um ein Heizungs- Kühl- oder Klimasystem so kann der Gradient das Abkühl- bzw. Aufheizverhalten über die Zeit eines Raums, eines Gebäudes, einer Wohnung oder eines Hauses beschreiben. Gleichermaßen kann der Gradient das Zeitverhalten des Lade- und Entladevorgangs eines Energiespeichersystems beschreiben.

Am Beispiel der Temperaturregelung eines Raumes kann der vorgegebene Anwesenheitszustand zum Beispiel eine Innenraumtemperatur von 21°C sein. Die Leistungsfähigkeit des System ist bekannt und beträgt 2 K/h. Demnach würde bei einer geschätzten Zeitdauer bis zum Eintreffen der Person am Ort des Systems von 2 Stunden ein Sollzustand von 19°C vorgegeben werden.

Gemäß der Erfindung umfasst das Schätzen der Zeitdauer weiterhin das Abgleichen der ermittelten Geoposition mit vorgehaltenen Geopositionsorten, für die vorab jeweils mindestens eine Verlassensuhrzeit gespeichert ist. Bei Übereinstimmung zwischen der ermittelten Geoposition und einem der vorgehaltenen Geopositionsorte wird die Zeit zwischen einer aktuellen Uhrzeit und der zeitlich nächsten statistisch relevanten für diesen Geopositionsort gespeicherten Verlassensuhrzeit als Wartezeit betrachtet und beim Schätzen der Zeitdauer berücksichtigt. Die zeitlich nächste Verlassensuhrzeit ist die Verlassensuhrzeit, die unter den für den Geopositionsort gespeicherten Verlassensuhrzeiten als nächstes auf die aktuelle Uhrzeit folgt. Mit statistisch relevanter Verlassensuhrzeit, ist eine Verlassensuhrzeit gemeint, der unter den für einen gespeicherten Geopositionsort eine statisch herausgehobene Bedeutung zukommt.

Als Beispiel sei hier angeführt, dass zum Beispiel eine Arbeitsstätte durchaus zu verschiedenen Zeiten verlassen werden kann, wobei jedoch nicht jeder dieser Verlassensuhrzeiten das gleiche statistische Gewicht zukommt. In der Regel wird eine Person ihre Arbeitsstätte zum Beispiel um 17 Uhr verlassen, um nach Hause aufzubrechen. Es kann aber auch vorkommen, dass die selbe Person an einem einzelnen Tag bereits schon um 12 Uhr nach Hause aufgebrochen ist. Diesem Einzelereignis kommt dann aber nur eine geringe statistische Relevanz zu. Um die statistische Relevanz der verschiedenen Verlassensuhrzeiten zu erfassen, kann zusätzlich zur Verlassensuhrzeit die Häufigkeit eines Verlassens des Geopositionsortes zur jeweiligen Verlassensuhrzeit vorab gespeichert werden.

Hält sich die Person zum Beispiel um 15 Uhr an ihrer Arbeitsstätte auf, für die 17 Uhr als zeitlich nächste statistisch relevante Verlassensuhrzeit gespeichert ist, beträgt die Wartezeit um 15 Uhr 2 Stunden.

In einer weiteren vorzugsweisen Ausführungsform der Erfindung umfasst das Schätzen der Zeitdauer ein Bestimmen einer Reisedauer von dem ermittelten Geopositionsort zum Ort des Systems. Eine solche Bestimmung der Reisedauer kann zum Beispiel auf der Basis bisheriger Durchschnittsbewegungsgeschwindigkeiten der Person und der Entfernung des ermittelten Geopositionsortes vom Ort des Systems erfolgen.

Die Bestimmung der Reisedauer zwischen dem Ort des Systems und dem Geopositionsort der Person kann aber zum Beispiel auch unter Anwendung oder Zuhilfenahme eines Navigations-/Routing-Algorithmus erfolgen, wie er aus handelsüblichen GPS-Navigationsgeräten oder der Webapplikation Google-Maps bekannt ist. Ein Navigations-/Routing-Algorithmus ist dazu eingerichtet, eine Reisedauer mit Hilfe von gespeicherten Karten und insbesondere mit Hilfe von gespeicherten voraussichtlichen Geschwindigkeiten für verschiedene Wege zu bestimmen.

Gemäß einer vorteilhaften Ausprägung der Bestimmung der Reisedauer kann vorgesehen sein, dass Geopositionsorte vorgehalten werden, für die zugehörige Reisedauern oder Reisedurchschnittsgeschwindigkeiten vorab gespeichert sind. Diese Reisedauern oder Reisedurchschnittsgeschwindigkeiten können auf zuvor gemessenen Reisedauern oder Geschwindigkeiten beruhen, die eine Person in der Vergangenheit tatsächlich bis zum Eintreffen am Ort des Systems benötigt hat. Bei dieser Verfahrensvariante wird eine aktuell ermittelte Geoposition der Person mit den vorgehaltenen Geopositionen verglichen. Bei Übereinstimmung der ermittelten Geoposition und einem vorgehaltenen Geopositionsort, wird eine für den Geopositionsort gespeicherte Reisedauer oder Geschwindigkeit zum Bestimmen der Reisedauer genutzt.

Stimmt die ermittelte Geoposition der Person nicht mit einem vorgehaltenen Geopositionsort überein, kann auch die gespeicherte Reisedauer oder Geschwindigkeit desjendigen Geopositionsortes verwendet werden, der der aktuell ermittelten Geoposition am nächsten ist.

Aus der Vielzahl an möglichen Geopositionsorten, an denen sich eine Person aufhalten kann, kommen aber nur eine begrenzte Anzahl für die Vorhaltung zur Wartezeitbestimmung und Reisedauerbestimmung in Betracht. Bei der Erfassung mit dem Ziel des Vorhaltens eines Geopositionsortes, kann sich ein Geopositionsort als vorzuhaltender Geopositionsort dadurch von beliebigen Geopositionsorten abheben, d.h. qualifizieren, dass die Person in der Vergangenheit an ihm für eine bestimmte Dauer verweilte, und danach von ihm aus zum Ort des Systems aufgebrochen ist.

Eine weitere Fortbildung des Verfahrens sieht vor, die Steuerung des ortsfesten Systems auf der Basis der Geopositionen mehrerer Personen durchzuführen, wobei für jede Person eine Zeitdauer geschätzt wird und das Vorgeben eines Sollzustandes an das System auf der kleinsten geschätzten Zeitdauer erfolgt.

Der Vollständigkeit halber sei noch angemerkt, dass das Verfahren kein Messen des aktuellen Systemzustandes vorsieht und diesen auch nicht in die Vorgabe des Sollzustandes mit einbezieht. Grund hierfür ist, dass das vorgeschlagene Verfahren sich nur mit der Vorgabe einer sinnvollen Führungsgröße also der Vorgabe eines Sollwertes befasst. Die tatsächliche regelungstechnische Einstellung der Regelgröße auf die vorgegebene Führungsgröße bzw. den vorgegebenen Sollwert erfolgt auf einer tieferen Ebene mittels eines geschlossenen Regelkreises und wird durch übliche regelungstechnische Lösungen wie zum Beispiel PID- oder Zustandsregler realisiert.

Beispielhaft sei das allgemeine Verfahren und die allgemeine Vorrichtung noch auf eine Raumtemperatursteuerung hin konkretisiert:
Verfahren und Vorrichtung zur Solltemperaturvorgabe an das Temperaturregelungssystem eines Raumes in Abhängigkeit von einem Aufenthaltsort einer Person, bei dem/der eine maximal mögliche Erwärmungsgeschwindigkeit des Raumes gegeben ist, bei dem/der eine Solltemperatur des Raumes vorgegeben ist, die bei Eintreffen der Person am Raum erreicht sein soll, dadurch gekennzeichnet, dass abhängig vom Aufenthaltsort der Person eine Abwesenheitsdauer bis zum Eintreffen der Person am Raum geschätzt wird, wobei abhängig von der Solltemperatur bei Eintreffen, der Abwesenheitsdauer und der maximal möglichen Erwärmungsgeschwindigkeiteine aktuelle Solltemperaturvorgabe ermittelt wird, die erforderlich ist, um den Raum bis zum Eintreffen der Person auf die vorgegebene Solltemperatur erwärmen zu können.

Analog kann das Verfahren sowie die Vorrichtung auch zum Kühlen mit einer Klimaanlage eingesetzt werden.

### KURZE BESCHREIBUNG DER ZEICHNUNGEN

Die Erfindung wird anhand der beigefügten Figuren näher erläutert. In den Zeichnungen zeigen:
**Fig. 1** ein schematisches Ablaufdiagramm, das einen Überblick über das erfindungsgemäße Verfahren zur Steuerung eines verzögerungsbehafteten Systems gibt;
**Fig. 2** einen typischen Verlauf der Reaktion der Regelgröße eines verzögerungsbehafteten Systems auf eine sprunghafte Änderung der Führungsgröße;
**Fig. 3** ein Beispiel für eine Funktion, aus der sich bei gegebener Zeitdauer (von der ermittelten Geoposition bis zum Eintreffen der Person am Ort des Systems) eine zugehörige Vorgabe eines Systemzustandes ablesen lässt, wobei die vorzugebenden Systemzustände für die jeweilige Zeitdauer so gewählt sind, dass ein gewünschter Sollzustand innerhalb der Zeitdauer eingestellt werden kann;
**Fig. 4** ein schematisches Ablaufdiagramm einer Abfolge von Verfahrensschritten zum Schätzen der Zeitdauer von der ermittelten Geoposition bis zum Eintreffen der Person am Ort des Systems;
**Fig. 5** ein schematisches Ablaufdiagramm einer alternativen Abfolge von Verfahrensschritten zum Schätzen der Zeitdauer von der ermittelten Geoposition bis zum Eintreffen der Person am Ort des Systems.

### DETAILLIERTE BESCHREIBUNG DER ZEICHNUNGEN

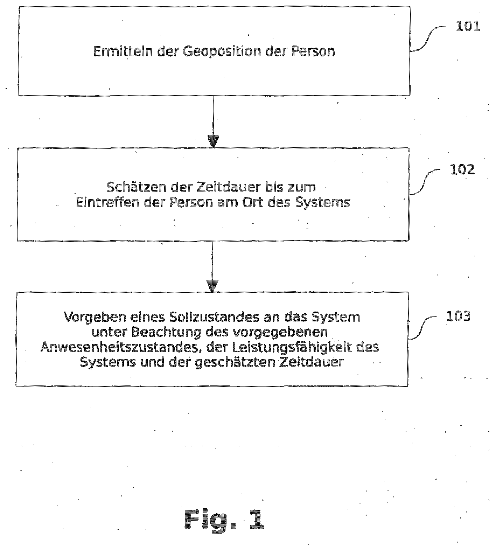

Der schematische Ablauf in **Fig. 1** gibt einen Überblick über die Schritte des erfindungsgemäßen Verfahrens. In Verfahrensschritt **101** wird die Geoposition einer Person ermittelt. Üblicherweise kann dies über eine Softwareapplikation auf einem Mobiltelefon der Person erfolgen. In Verfahrensschritt **102** wird eine Zeitdauer geschätzt, die die Person von der ermittelten Geoposition bis zum Eintreffen am Ort des Systems benötigt. Schließlich wird in Verfahrensschritt **103** dem System ein Sollzustand vorgegeben, der so gewählt ist, dass das System einen von der Person gewünschten Anwesenheitszustand innerhalb der bestimmten Zeitdauer erreichen kann. Dieser Sollzustand wird unter Beachtung des vorgegeben Anwesenheitszustandes, der Leistungsfähigkeit des Systems und der geschätzten Zeitdauer aus Schritt **102** bestimmt.

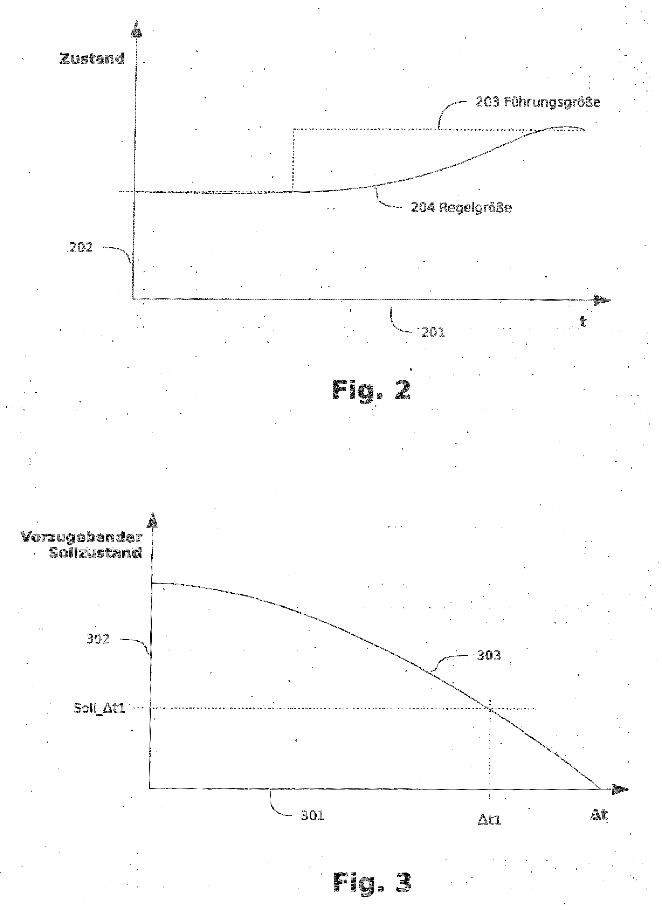

**Fig. 2** zeigt den typischen Verlauf der Reaktion der Regelgröße eines verzögerungsbehafteten Systems auf eine sprunghafte Änderung der Führungsgröße. Die Verzögerung ergibt sich dabei in der Regel aufgrund einer begrenzten Leistungsfähigkeit des Systems, sodass alternativ auch von einem System mit gegebener Leistungsfähigkeit gesprochen werden kann. In **Fig. 2** ist auf der Abszisse **201** die Zeit und auf der Ordinate **202** ein allgemein als Zustand bezeichnete Größe des Systems aufgetragen. Ein Zustand könnte zum Beispiel die Innentemperatur eines beheizten oder eines gekühlten bzw. klimatisierten Raumes sein. Über die Führungsgröße **203** wird dem System ein Sollzustand oder Sollwert vorgegeben, den die Regelgröße **204** aber erst mit Verzögerung nach einer gewissen Zeit erreicht. Übliche Verzögerungen im Bereich der Innentemperatursteuerung liegen im Bereich 0.01-5 K/h, 0.1-5 K/h, 0.2-4 K/h, 0.5-3 K/h oder 1-3 K/h. Eine Verzögerung von 1 K/h bedeutet, dass ein Sprung der Führungsgröße oder des Sollwertes von 1 K erst nach 1 Stunde in der Regelgröße erkennbar ist.

In **Fig.** 3 ist auf der Abszisse **301** die Zeitdauer Δt aufgetragen, die die Person von der ermittelten Geoposition bis zum Eintreffen am Ort des Systems benötigt. Auf der Ordinate **302** ist eine allgemein als "vorzugebender Sollzustand" bezeichnete Größe des Systems dargestellt. Im Beispiel des beheizten oder gekühlten bzw. klimatisierten Raumes ist dies die Innentemperatur des beheizten oder gekühlten bzw. klimatisierten Raumes. Betrachtet man dagegen zum Beispiel einen Energiespeicher, so wäre eine sinnvolle entsprechende Größe des Systems etwa der Ladezustand des Energiespeichers. Aus der Funktionskurve **303** der **Fig. 3** kann also bei gegebener Zeitdauer Δt1, die die Person bis zum Eintreffen am Ort des Systems benötigt, die Vorgabe des Systemzustandes Soll_Δt1 abgelesen werden, die erforderlich ist, um einen zum Zeitpunkt des Eintreffens der Person am Ort des Systems gewünschten Sollzustand innerhalb der Zeitdauer Δt1 einzustellen. Auf Grundlage einer solchen vorbestimmten Funktionskurve **303** kann bei einer erfindungsgemäßen Verfahrensvariante die vorzugebende Sollgröße festgelegt werden.

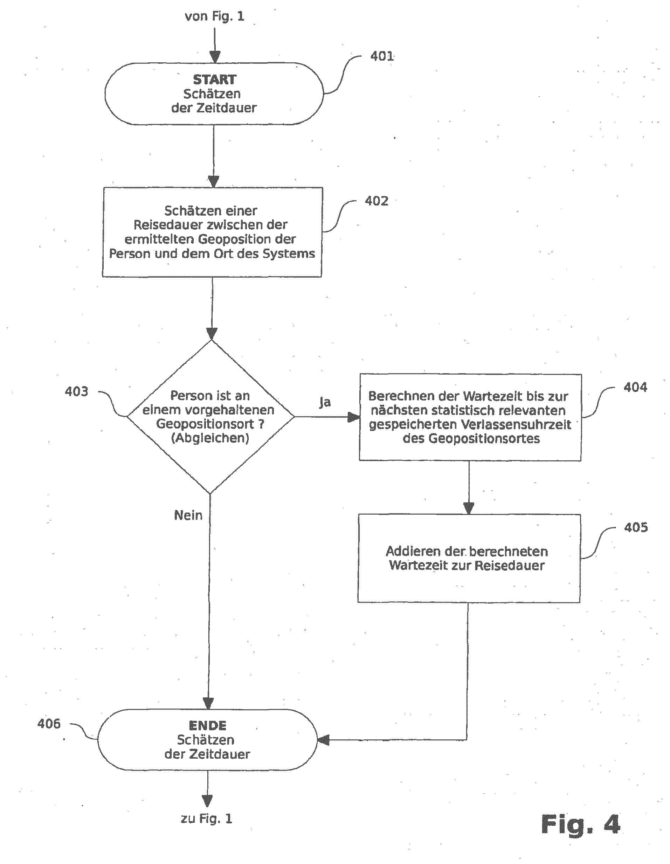

In **Fig. 4** ist eine erste Alternative möglicher Unterschritte des Verfahrensschrittes **102** aus dem in **Fig. 1** wiedergegeben Verfahren dargestellt. Genauer handelt es sich um eine Detailansicht einer ersten möglichen Alternative zum Schätzen der Zeitdauer bis zum Eintreffen der Person am Ort des Systems. Gemäß dieser ersten Alternative umfasst hier der Verfahrensschritt **102** aus der **Fig. 1** die Schritte **401** bis **406.** Der Ablauf beginnt mit Schritt **401.** In Schritt **402** wird die Reisedauer bestimmt, die die Person von der in Schritt **101** ermittelten Geoposition benötigt, um zu dem Ort des Systems zu gelangen. Im einfachsten Fall kann hier allein aus der Distanz des Geopositionsortes vom Ort des Systems eine Reisedauer bestimmt werden. Zum Beispiel kann ein allgemeiner Erfahrungssatz verwendet werden, nachdem einer gewissen Distanz eine für eine solche Distanz übliche Reisedauer zugeordnet ist. Alternativ könnte für die Person eine allgemeine, d.h. geopositionsunabhängige Reisedurchschnittsgeschwindigkeit hinterlegt sein, aus der mittels der Distanz die Reisedauer bestimmt werden kann. Eine weitere Alternative, die auch in Kombination mit den vorgenannten Beispielen angewendet werden kann, ist eine Durchschnittsreisegeschwindigkeit aus einer aktuellen zeitlichen Änderung der Geoposition der Person zu ermitteln. Die Entfernung oder Distanz kann sowohl der Luftlinienabstand als auch ein Abstand auf der Basis von tatsächlichen Wegen, beispielsweise einer Straßenkarte, ermittelt werden. Im Schritt **403** wird geprüft, ob sich die Person zum aktuellen Zeitpunkt an einem vorgehaltenen Geopositionsort aufhält.

Ist dies der Fall so kann auf mindestens eine gespeicherte Verlassensuhrzeit für den Geopositionsort zurückgegriffen werden. In Schritt **404** wird diese Information genutzt, um die Wartezeit von der aktuellen Uhrzeit bis zur gespeicherten Verlassensuhrzeit des Geopositionsortes für die Person zu berechnen. Für einen Geopositionsort können grundsätzlich auch mehrere Verlassensuhrzeiten gespeichert sein, wobei jeweils die zeitlich nächste statistisch relevante der Person und dem Geopositionsort zugehörige Verlassensuhrzeit zur Berechnung der Wartezeit bis zur gespeicherten Verlassensuhrzeit verwendet wird. In Schritt **405** wird dann das Ergebnis der Berechnung zur Reisedauer aus Schritt **404** addiert. Anschließend wird das Ergebnis über Schritt **406** an Schritt **103** in **Fig. 1** weitergereicht.

Ergibt die Prüfung in Schritt **403,** dass es sich bei der aktuellen Geoposition der Person nicht um einen vorgehaltenen Ort der Person handelt, wird direkt die in Schritt **402** bestimmte Reisedauer als Zeitdauer über Schritt **406** an Schritt **103** in **Fig. 1** weitergegeben.

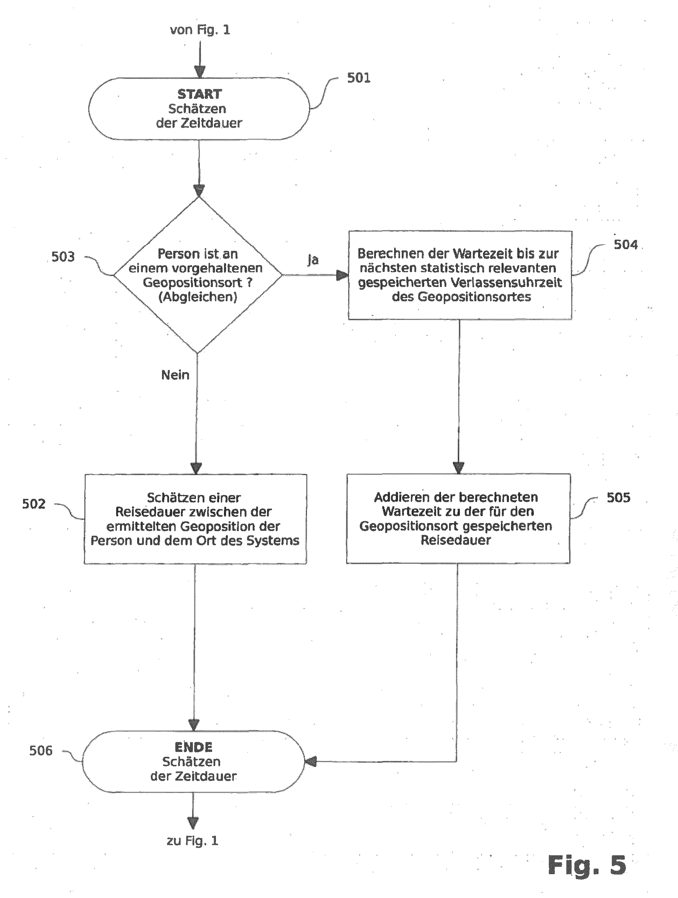

In **Fig. 5** ist eine zweite Alternative möglicher Unterschritte des Verfahrensschrittes **102** aus der **Fig. 1** wiedergegeben. Folglich ist **Fig. 5** eine Detailansicht einer zweiten möglichen Alternative zum Schätzen der Zeitdauer bis zum Eintreffen der Person am Ort des Systems. Der Ablauf beginnt analog zum Ablauf der **Fig. 4** mit Schritt **501.** Im Gegensatz zum Ablauf in **Fig. 4** folgt auf Schritt **501** direkt die Entscheidung **503.** Im Schritt 503 wird geprüft, ob sich die Person zum aktuellen Zeitpunkt an einem vorgehaltenen Geopositionsort aufhält.

Ist dies der Fall, so liegt für den Geopositionsort auch mindestens eine gespeicherte Verlassensuhrzeit sowie eine gespeicherte Reisedauer vor, die beschreibt, wie lange die Person in der Regel für die Wegstrecke vom Geopositionsort zum Ort des Systems benötigt. Diese beiden gespeicherten Zeiten werden in den Schritten **504** und **505** verwendet, um die Zeitdauer bis zum Eintreffen der Person am Ort des Systems zu schätzen. Im Schritt **504** wird die Zeit von der aktuellen Uhrzeit bis zur zeitlich nächsten statistisch relevanten gespeicherten Verlassensuhrzeit berechnet. Im Schritt **505** wird zu diesem Ergebnis die gespeicherte Reisedauer hinzugerechnet. Anschließend wird das Ergebnis über Schritt **506** an Schritt **103** in **Fig. 1** weitergereicht.

Ergibt die Prüfung in Schritt **503** hingegen, dass es sich bei der aktuellen Geoposition der Person nicht um einen vorgehaltenen Ort der Person handelt, wird stattdessen in Schritt **502** die Reisedauer als Zeitdauer verwendet und über Schritt **406** an Schritt **103** in **Fig. 1** weitergegeben.

## Patentansprüche

1. Verfahren zur Steuerung eines Systemzustands eines ortsfesten verzögerungsbehafteten Systems in Abhängigkeit von einer variablen Geoposition einer Person, wobei das System, wenn die Person am Ort des Systems eintrifft, einen vorgegebenen Anwesenheitszustand erreicht haben soll, umfassend:
Ermitteln der Geoposition der Person (101);
Schätzen einer Zeitdauer (102), die die Person von der ermittelten Geoposition aus bis zum Eintreffen am Ort des Systems benötigt; und
Vorgeben eines Sollwerts zum Ändern des aktuellen Systemzustands, wobei der Sollwert zum Erreichen des Anwesenheitszustands innerhalb der geschätzten Zeitdauer in Abhängigkeit des vorgegebenen Anwesenheitszustands, der Leistungsfähigkeit des Systems und der geschätzten Zeitdauer ermittelt wird,
**dadurch gekennzeichnet, dass** das Schätzen der Zeitdauer weiterhin das Bestimmen einer Wartezeit umfasst, die die Person voraussichtlich an einer Geoposition verbringt, bevor sie zu dem Ort des Systems aufbricht, wobei dazu die ermittelte Geoposition mit vorgehaltenen Geopositionsorten verglichen wird, zu denen jeweils mindestens eine Verlassensuhrzeit vorab gespeichert ist, wobei bei einer Übereinstimmung zwischen der ermittelten Geoposition und einem der vorgehaltenen Geopositionsorte die Zeitdauer zwischen einer aktuellen Uhrzeit und der zeitlich nächsten statistisch relevanten für diesen Geopositionsort gespeicherten Verlassensuhrzeit die Wartezeit darstellt.

2. Verfahren nach Anspruch 1, bei dem das Schätzen der Zeitdauer das Bestimmen einer Reisedauer zwischen der ermittelten Geoposition der Person und dem Ort des Systems umfasst, wobei optional das Schätzen der Reisedauer unter Anwendung eines Navigations-/Routing-Algorithmus erfolgt.

3. Verfahren nach Anspruch 2, bei dem das Bestimmen der Reisedauer das Rückgreifen auf eine vorab gespeicherte Reisedauer oder Durchschnittsgeschwindigkeit umfasst, wobei dazu die ermittelte Geoposition mit vorgehaltenen Geopositionsorten verglichen wird, zu denen jeweils eine Reisedauer oder eine Durchschnittsgeschwindigkeit zwischen dem ortsfesten System und dem ermittelten Geopositionsort vorab gespeichert ist, wobei bei einer Übereinstimmung zwischen der ermittelten Geoposition und einem der vorgehaltenen Geopositionsorte die gespeicherte Reisezeit oder Durchschnittsgeschwindigkeit für diesen Geopositionsort zum Bestimmen der Reisedauer genutzt wird.

4. Verfahren nach einem der vorhergehenden Ansprüche, bei dem die Leistungsfähigkeit des Systems durch einen vorab bestimmten Gradienten beschrieben wird, der ein Maß für das Erreichen eines Sollzustandes pro Zeiteinheit auf eine Änderung des Sollzustandes hin darstellt.

5. Verfahren nach einem der vorhergehenden Ansprüche, bei dem die Steuerung des ortsfesten Systems auf der Basis der Geopositionen mehrerer Personen erfolgt und für jede Person eine Zeitdauer geschätzt wird, wobei das Vorgeben eines Sollzustandes (103) auf der kleinsten geschätzten Zeitdauer erfolgt.

6. Verfahren nach einem der vorhergehenden Ansprüche, wobei ein vorgehaltener Geopositionsort dadurch charakterisiert ist, dass die Person in der Vergangenheit an ihm für eine bestimmte Dauer verweilte und von ihm aus zum Ort des System aufgebrochen ist.

7. Verfahren nach einem der vorhergehenden Ansprüche, bei dem das ortsfeste System ein Heizungsanlagensystem, ein Klimaanlagensystem, ein Energiespeichersystem, ein Warmwasserboiler, ein Energiespeicher eines Elektrofahrzeugs oder ein beheizter oder klimatisierter Raum, eine beheizte, gekühlte oder klimatisierte Wohnung, ein beheiztes, gekühltes oder klimatisiertes Haus oder ein beheiztes, gekühltes oder klimatisiertes Gebäude ist, wobei der Systemzustand eine Raumtemperatur, ein Speicherzustand, eine Temperatur, eine Wassertemperatur, oder ein Ladezustand ist.

8. Verfahren nach Anspruch 4, bei dem der Gradient das zeitliche Abkühl- oder Aufheizverhalten eines Raums, eines Gebäudes, einer Wohnung, eines Hauses oder das zeitliche Ladeverhalten eines Energiespeichersystems beschreibt.

9. Vorrichtung zur Durchführung des Verfahrens nach einem der vorhergehenden Ansprüche, mit:
Mitteln zum Ermitteln der Geoposition der Person (101);
Mitteln zum Schätzen einer Zeitdauer (102), die die Person von der ermittelten Geoposition aus bis zum Eintreffen am Ort des Systems benötigt, wobei das Schätzen der Zeitdauer weiterhin das Bestimmen einer Wartezeit umfasst, die die Person voraussichtlich an einer Geoposition verbringt, bevor sie zu dem Ort des Systems aufbricht, wobei dazu die ermittelte Geoposition mit vorgehaltenen Geopositionsorten verglichen wird, zu denen jeweils mindestens eine Verlassensuhrzeit vorab gespeichert ist, wobei bei einer Übereinstimmung zwischen der ermittelten Geoposition und einem der vorgehaltenen Geopositionsorte die Zeitdauer zwischen einer aktuellen Uhrzeit und der zeitlich nächsten statistisch relevanten für diesen Geopositionsort gespeicherten Verlassensuhrzeit die Wartezeit darstellt; und
Mitteln zum Vorgeben eines Sollwerts zum Ändern des aktuellen Systemzustands.

## Claims

1. Method for controlling a system state of a stationary system affected by delays as a function of a variable geoposition of a person, wherein the system is to have reached a predefined presence state when the person arrives at the location of the system, comprising:
determining the geoposition of the person (101);
estimating the time period (102) needed by the person from the determined geoposition until arrival at the location of the system; and
specifying a reference state for changing the current system state, wherein the reference state for reaching the presence state within the estimated time period is determined as a function of the predefined presence state, the performance capability of the system and the estimated time period,
**characterized in that** estimating the time period further comprises determining a waiting time that the person is anticipated to spend at a geoposition before he sets off for the location of the system,
wherein for this purpose, the determined geoposition is compared with stored geoposition locations, for each of which at least one leaving time has been previously saved, wherein if the determined geoposition and one of the stored geoposition locations coincide, the time period between the current clock time and the next, in temporal terms, statistically relevant leaving time saved for this geoposition location represents the waiting time.

2. Method according to claim 1, wherein estimating the time period comprises determining a journey duration between the determined geoposition of the person and the location of the system, wherein optionally the estimation of the journey duration is realised by applying a navigation/routing algorithm.

3. Method according to claim 2, wherein determining the journey duration comprises reverting back to a previously saved journey duration or average speed, wherein for this purpose the determined geoposition is compared with stored geoposition locations, for each of which a journey duration or an average speed between the stationary system and the determined geoposition location has been previously saved, wherein if the determined geoposition and one of the stored geoposition locations coincide, the saved journey duration or average speed for this geoposition location is used to determine the journey duration.

4. Method according to one of the preceding claims, wherein the performance capability of the system is described by a previously determined gradient which represents a measure for reaching a reference state per time unit in response to a change in the reference state.

5. Method according to one of the preceding claims, wherein the control of the stationary system is realised on the basis of the geopositions of a plurality of persons and a time period is estimated for each person, wherein the specifying of a reference state (103) is realised on the shortest estimated time period.

6. Method according to one of the preceding claims, wherein a stored geoposition location is**characterised in that** the person has in the past remained there for a certain duration and set off from there for the location of the system.

7. Method according to one of the preceding claims, wherein the stationary system is a heating system, an air conditioning system, an energy storage system, a hot water boiler, an energy storage device of an electric vehicle or a heated or air conditioned room, a heated, cooled or air conditioned home, or a heated, cooled or air conditioned building, wherein the system state is a room temperature, a storage device state, a temperature, a water temperature or a state of charge.

8. Method according to claim 4, wherein the gradient describes the cooling or heating behaviour over time of a room, a home or a building, or the charging behaviour over time of an energy storage system.

9. Device for carrying out the method of one of the preceding claims, comprising:
means for determining the geoposition of the person (101);
means for estimating a time period (102) needed by the person from the determined geoposition until arrival at the location of the system; wherein estimating the time period further comprises determining a waiting time that the person is anticipated to spend at a geoposition before he sets off for the location of the system, wherein for this purpose, the determined geoposition is compared with stored geoposition locations, for each of which at least one leaving time has been previously saved,
wherein if the determined geoposition and one of the stored geoposition locations coincide, the time period between the current clock time and the next, in temporal terms, statistically relevant leaving time saved for this geoposition location represents the waiting time, and
means for specifying a reference state for changing the current system state.

## Revendications

1. Procédure pour commander un état de système d'un système fixe affecté par des délais en fonction d'une géoposition variable d'une personne, tandis que le système, lorsque la personne arrive au lieu du système, doit avoir atteint un état de présence prédéterminé, comprenant :
la détermination de la géoposition de la personne (101),
l'estimation d'une durée temporelle (102) dont la personne a besoin à partir de la géoposition déterminée pour arriver au lieu du système, et
la fixation d'une valeur de consigne pour modifier l'état actuel du système, tandis que la valeur de consigne est déterminée pour que l'état de présence soit atteint durant la durée estimée en fonction de l'état de présence prédéterminé, de la performance du système et de la durée estimée,
**caractérisée en ce que** l'estimation de la durée comprend en outre la détermination d'un délai d'attente que la personne passe vraisemblablement à une géoposition, avant qu'elle ne parte au lieu du système,
et, à cette fin, la géoposition déterminée étant comparée avec les lieux de géoposition retenus, pour lesquels au moins une heure de départ a déjà été préalablement mémorisée, tandis qu'en cas de correspondance entre la géoposition déterminée et l'un des lieux de géoposition retenus, la durée entre une heure actuelle et l'heure de départ statistiquement pertinente et la plus proche sur le plan temporel mémorisée pour ce lieu de géoposition représente la durée d'attente.

2. Procédure selon la revendication 1, dans le cadre de laquelle l'estimation de la durée comprend une durée de trajet entre la géoposition déterminée de la personne et le lieu du système, tandis que, de manière optionnelle, l'estimation de la durée du trajet est réalisée en application d'un algorithme de routage ou de navigation.

3. Procédure selon la revendication 2, dans le cadre de laquelle la détermination de la durée du trajet comprend une durée de trajet ou une vitesse moyenne préalablement mémorisée, tandis qu'en outre, la géoposition déterminée est comparée avec des lieux de géoposition retenus, pour lesquels une durée de voyage ou une vitesse moyenne entre le système fixe et le lieu de géoposition déterminé est préalablement mémorisée, tandis qu'en cas de correspondance entre la géoposition déterminée et l'un des lieux de géoposition retenus, la durée de trajet mémorisée ou la vitesse moyenne pour ce lieu de géoposition est utilisée pour déterminer la durée de trajet.

4. Procédure selon l'une des revendications ci-dessus, dans le cadre de laquelle la performance du système est décrite grâce à un gradient précédemment déterminé, qui représente une mesure pour atteindre un état de consigne par unité de temps en vue d'une modification de l'état de consigne.

5. Procédure selon l'une des revendications ci-dessus, dans le cadre de laquelle la commande du système fixe est réalisée sur la base des géopositions de plusieurs personnes et de la durée temporelle est estimée pour chaque personne, tandis que la fixation d'un état de consigne (103) est réalisée sur la base de la durée estimée la plus courte.

6. Procédure selon l'une des revendications précédentes, pour autant qu'ils renvoient à la revendication 2 et/ou à la revendication 4, tandis qu'un lieu de géoposition retenu est **caractérisé en ce que** la personne a séjourné par le passé en ce lieu pour une durée déterminée et est partie de ce lieu pour se rendre au lieu du système.

7. Procédure selon l'une des revendications précédentes, dans le cadre de laquelle le système fixe est un système d'installations de chauffage, un système d'installations de climatisation, un système de stockage d'énergie, un chauffe-eau, un accumulateur d'énergie d'un véhicule électrique ou une pièce climatisée ou chauffée, un appartement chauffé, refroidi ou climatisé, une maison chauffée, refroidie ou climatisée ou un bâtiment chauffé, refroidi ou climatisé, tandis que l'état du système est une température ambiante, un état de stockage, une température, une température d'eau ou un état de chargement.

8. Procédure selon la revendication 4, dans le cadre de laquelle le gradient décrit le comportement temporel de refroidissement ou de chauffage d'une pièce, d'un bâtiment, d'un appartement, d'une maison ou le comportement temporel de chargement d'un système de stockage d'énergie.

9. Dispositif pour l'exécution de la procédure selon l'une des revendications précédentes, avec :
des moyens pour déterminer la géoposition de la personne (101),
des moyens pour estimer une durée (102) dont la personne a besoin à partir de la géoposition déterminée pour atteindre le lieu du système, l'estimation de la durée comprenant en outre la détermination d'un délai d'attente que la personne passe vraisemblablement à une géoposition, avant qu'elle ne parte au lieu du système, et, à cette fin, la géoposition déterminée étant comparée avec les lieux de géoposition retenus, pour lesquels au moins une heure de départ a déjà été préalablement mémorisée, tandis qu'en cas de correspondance entre la géoposition déterminée et l'un des lieux de géoposition retenus, la durée entre une heure actuelle et l'heure de départ statistiquement pertinente et la plus proche sur le plan temporel mémorisée pour ce lieu de géoposition représente la durée d'attente, et
des moyens pour la fixation d'une durée de consigne pour modifier l'état actuel du système.
